# EUROPEAN PATENT SPECIFICATION

(11) **EP 3 393 151 B1**
(45) Date of publication and mention of the grant of the patent: **01.07.2020**
(21) Application number: 18177704.6
(22) Date of filing: 08.04.2016
(51) Int. Cl.: H04W 4/06, H04W 36/08

(54) **BASE STATION AND USER TERMINAL IN MOBILE COMMUNICATION SYSTEM**
BASISSTATION IN EINEM MOBILKOMMUNIKATIONSSYSTEM UND BENUTZERENDGERÄT
STATION DE BASE DANS UN SYSTÈME DE COMMUNICATIONS MOBILES, ET TERMINAL D'UTILISATEUR

(30) Priority: 10.04.2015 US 201562145897 P
(43) Date of publication of application: 24.10.2018
(62) Divisional of application: 16776713.6
(73) Proprietor: Kyocera Corporation, Kyoto-shi, Kyoto 612-8501 (JP)
(72) Inventor: FUJISHIRO, Masato, Kyoto, 612-8501 (JP); IWABUCHI, Akinori, Kyoto, 612-8501 (JP); CHANG, Henry, San Diego, CA California 92123 (US)
(74) Representative: SSM Sandmair

(56) References cited:
- EP-A1- 2 809 091
- EP-A1- 3 101 923
- WO-A2-2012/134182
- US-A1- 2013 083 715
- QUALCOMM INCORPORATED: "SC-PTM Configuration Signalling", 3GPP DRAFT; R2-150482 (SC-PTM CONFIGURATION) V1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Athens, Greece; 20150209 - 20150213 8 February 2015 (2015-02-08), XP050935734, Retrieved from the Internet: URL:http://www.3gpp.org/ftp/Meetings_3GPP_ SYNC/RAN2/Docs/ [retrieved on 2015-02-08]
- QUALCOMM INCORPORATED: "PTM Service Continuity", 3GPP DRAFT; R2-150484 (PTM SERVICE CONTINUITY), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Athens, Greece; 20150209 - 20150213 31 January 2015 (2015-01-31), XP050952505, Retrieved from the Internet: URL:http://www.3gpp.org/ftp/tsg_ran/WG2_RL 2/TSGR2_89/Docs/ [retrieved on 2015-01-31]

## Description

### TECHNICAL FIELD

The present invention relates to a base station and a user terminal in a mobile communication system.

### BACKGROUND ART

In the Third Generation Partnership Project (3GPP) that is a mobile communication system standardization project, Multimedia Broadcast Multicast Service (MBMS) is specified to provide a broadcast/multicast service.

In the current MBMS, broadcast/multicast data is transmitted via a Physical Multicast Channel (PMCH) for each Multicast-Broadcast Single-Frequency Network (MBSFN) area including a plurality of cells (MBSFN transmission).

Meanwhile, Single Cell Point to Multi-point (SC-PTM) transmission has been studied to provide an efficient group communication service (multicast service). In the SC-PTM transmission, multicast data is transmitted via a Physical Downlink Shared Channel (PDSCH), for each cell.

### CITATION LIST

### NON PATENT LITERATURE

Non patent Literature 1: 3GPP Contribution "RP-142205"

EP 3 101 923 A1, which has been published after the filing date of the present invention, relates to an MBMS measurement control method and a user terminal which are used in a mobile communication system that supports MBMS.

Qualcomm Incorporated: "SC-PTM Configuration Signalling", 3GPP DRAFT; R2-150482 discusses the signaling options for SC-PTM configuration.

US 2013/083715 A1 describes devices, methods, computer-readable media and systems configurations for management and/or support of multimedia broadcast multicast service (MBMS) service in a wireless communications network.

### SUMMARY

### BRIEF DESCRIPTION OF DRAWINGS

Fig. 1 is a diagram illustrating a configuration of an LTE system.
Fig. 2 is a diagram illustrating a network configuration according to a MBMS/eMBMS.
Fig. 3 is a protocol stack diagram of a radio interface in the LTE system.
Fig. 4 is a diagram illustrating a downlink channel configuration in the LTE system.
Fig. 5 is a configuration diagram of a radio frame used in the LTE system.
Fig. 6 is a block diagram of a UE 100 (user terminal).
Fig. 7 is a block diagram of an eNB 200 (base station).
Fig. 8 is a diagram for describing an example of SC-PTM transmission.
Fig. 9 is a sequence diagram illustrating an example of a SC-PTM control procedure.
Fig. 10 is a diagram illustrating operation of a UE according to a first embodiment.
Fig. 11 is a diagram illustrating operation according to a second embodiment.
Fig. 12 is a diagram illustrating operation according to a third embodiment.
Fig. 13 is a diagram illustrating operation according to a fourth embodiment.
Fig. 14 is a diagram illustrating modification 3 of the fourth embodiment.
Fig. 15 is a diagram illustrating operation according to a fifth embodiment.
Fig. 16 is a diagram illustrating operation according to a sixth embodiment.

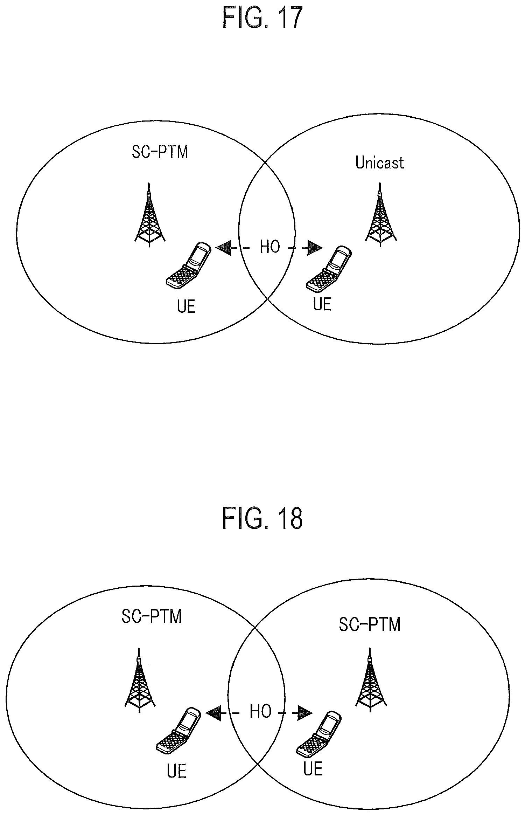

Fig. 17 is a diagram illustrating scenario 1 that is a transition between SC-PTM and unicast according to a supplementary note.
Fig. 18 is a diagram illustrating scenario 2 that is a transition from SC-PTM to SC-PTM according to the supplementary note.

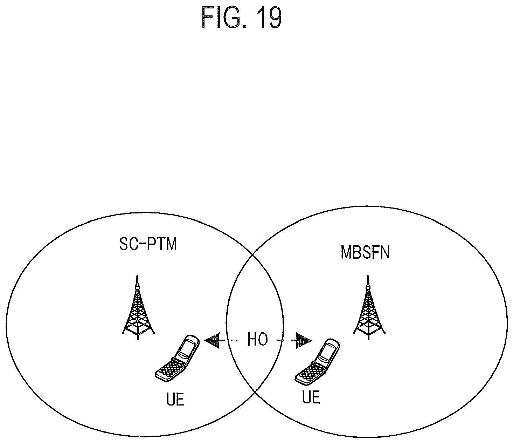

Fig. 19 is a diagram illustrating scenario 3 that is a transition between SC-PTM and MBSFN according to the supplementary note.

### DESCRIPTION OF EMBODIMENTS

### [Overview of Embodiments]

In a case where SC-PTM transmission is introduced, as an option of a transmission scheme of downlink data (user data), the SC-PTM transmission is added to unicast transmission and MBSFN transmission.

However, it is not clear how service continuity is guaranteed among these transmission schemes. In particular, it is desirable that the service continuity is guaranteed considering mobility of a user terminal.

### [Overview of mobile communication system]

Hereinafter, an overview of an LTE system which is the mobile communication system according to the embodiments will be described below.

### (System Configuration)

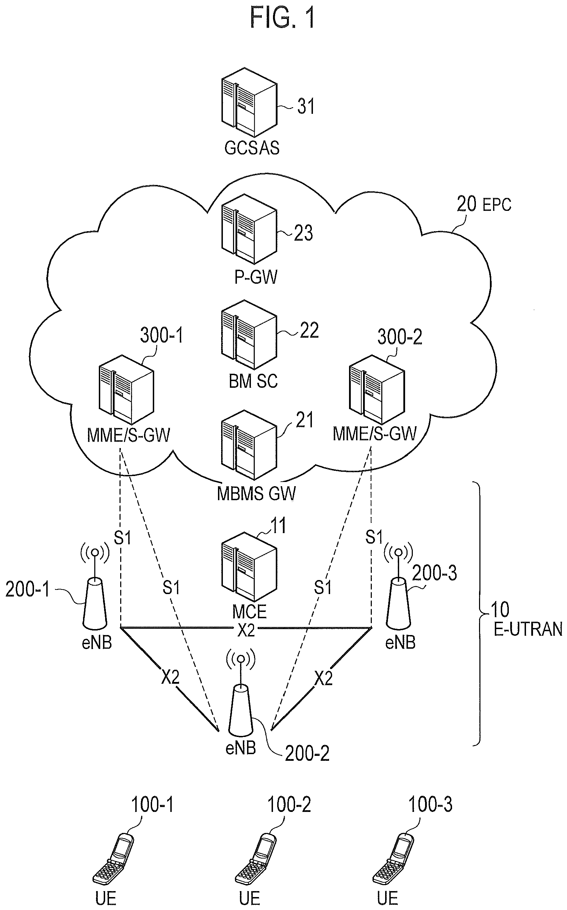

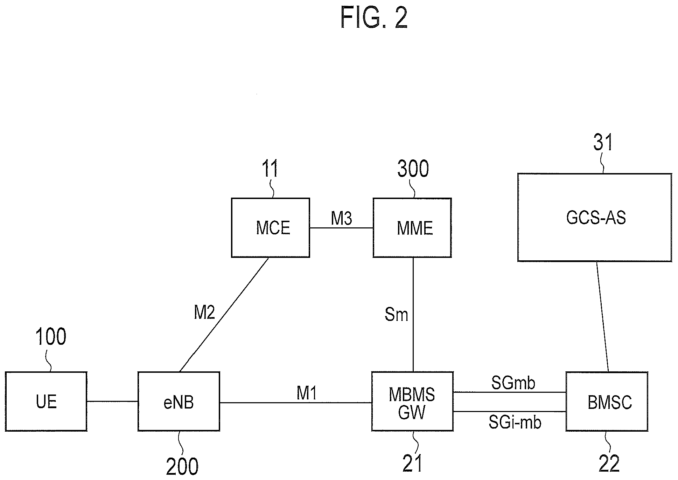

FIG. 1 is a diagram illustrating a configuration of the LTE system according to the embodiments. FIG. 2 is a diagram illustrating a configuration of a network according to MBMS/eMBMS according to the embodiments.

As illustrated in Fig. 1, the LTE system includes a plurality of UEs (User Equipments) 100, E-UTRAN (Evolved-UMTS Terrestrial Radio Access Network) 10, and EPC (Evolved Packet Core) 20.

The UE 100 corresponds to a user terminal. The UE 100 is a mobile communication device and performs radio communication with a cell (a serving cell). Configuration of the UE 100 will be described later.

The E-UTRAN 10 corresponds to a radio access network. The E-UTRAN 10 includes a plurality of eNBs (evolved Node-Bs) 200. The eNB 200 corresponds to a base station. The eNBs200 are connected mutually via an X2 interface. Configuration of the eNB200 will be described later.

The eNB 200 manages one or a plurality of cells and performs radio communication with the UE 100 which establishes a connection with the cell of the eNB 200. The eNB 200 has a radio resource management (RRM) function, a routing function for user data (hereinafter simply referred as "data"), and a measurement control function for mobility control and scheduling, and the like. It is noted that the "cell" is used as a term indicating a minimum unit of a radio communication area, and is also used as a term indicating a function of performing radio communication with the UE 100.

The EPC 20 corresponds to a core network. The EPC 20 includes a plurality of MME (Mobility Management Entity)/S-GWs (Serving-Gateways) 300. The MME performs various mobility controls and the like for the UE 100. The S-GW performs control to transfer data. MME/S-GW 300 is connected to eNB 200 via an S1 interface. The E-UTRAN 10 and the EPC 20 constitute a network of the LTE system.

Moreover, the E-UTRAN 10 includes an MCE (Multi-Cell/Multicast Coordinating Entity) 11. The MCE 11 corresponds to a multicast control apparatus. The MCE 11 is connected to the eNB 200 via a M2 interface and is connected to the MME 300 via a M3 interface (See Fig. 2). The MCE 11 performs MBSFN radio resource management/allocation and the like.

The EPC 20 includes an MBMS GW (Multimedia Broadcast Multicast Service Gateway) 21. The MBMS GW 21 is connected to the eNB 200 via a M1 interface, connected to the MME 300 via a Sm interface, and connected to a BM-SC 22 via a SG-mb interface and a SGi-mb interface (See Fig. 2). The MBMS GW 21 performs IP multicast data transmission and session control to the eNB 200.

The EPC 20 also includes a BM-SC (Broadcast Multicast Service Center) 22. The BM-SC 22 is connected to the MBMS GW 21 via the SG-mb and SGi-mb interfaces, and is connected to the P-GW 23 via the SGi interface (See Fig. 2). The BM-SC 22 mainly manages and allocates TMGI (Temporary Mobile Group Identity).

Further, a GCS AS (Group Communication Service Application Server) 31 is provided in a network (i.e., the Internet) outside the EPC 20. The GCS AS 31 is an application server for group communication. The GCS AS is connected to a BM-SC 22 via a MB2-U interface and a MB2-C interface, and is connected to a P-GW 23 via a SGi interface. The GCS AS 31 performs group management and data distribution (including determination of whether to use MBMS or whether to use unicast) in group communication and the like.

### (Configuration of raido protocol)

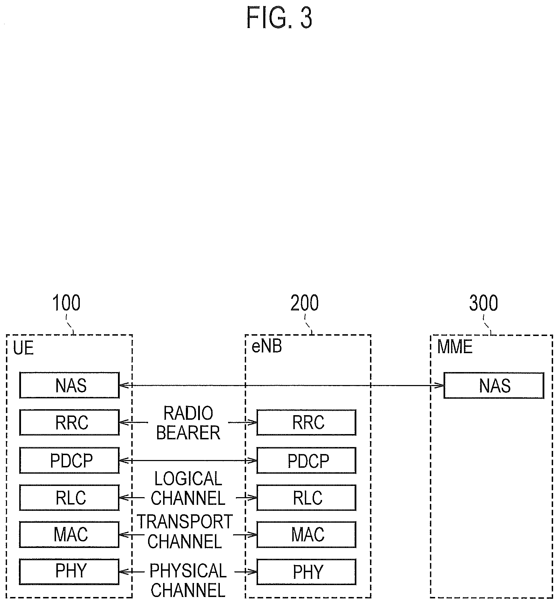

Fig. 3 is a protocol stack diagram of a radio interface in the LTE system.

As illustrated in Fig. 3, the radio interface protocol is classified into a layer 1 to a layer 3 of an OSI reference model, wherein the layer 1 is a physical (PHY) layer. The layer 2 includes a MAC (Medium Access Control) layer, an RLC (Radio Link Control) layer, and a PDCP (Packet Data Convergence Protocol) layer. The layer 3 includes an RRC (Radio Resource Control) layer.

The PHY layer performs encoding and decoding, modulation and demodulation, antenna mapping and demapping, and resource mapping and demapping. Between the PHY layer of the UE 100 and the PHY layer of the eNB 200, data and control signal are transmitted via the physical channel.

The MAC layer performs priority control of data, a retransmission process by hybrid ARQ (HARQ), and a random access procedure and the like. Between the MAC layer of the UE 100 and the MAC layer of the eNB 200, data and control signal are transmitted via a transport channel. The MAC layer of the eNB 200 includes a scheduler that determines a transport format of an uplink and a downlink (a transport block size and a modulation and coding scheme (MCS)) and a resource block to be assigned to the UE 100.

The RLC layer transmits data to an RLC layer of a reception side by using the functions of the MAC layer and the PHY layer. Between the RLC layer of the UE 100 and the RLC layer of the eNB 200, data and control signal are transmitted via a logical channel.

The PDCP layer performs header compression and decompression, and encryption and decryption.

The RRC layer is defined only in a control plane dealing with control signal. Between the RRC layer of the UE 100 and the RRC layer of the eNB 200, message (RRC messages) for various types of configuration are transmitted. The RRC layer controls the logical channel, the transport channel, and the physical channel in response to establishment, re-establishment, and release of a radio bearer. When there is a connection (RRC connection) between the RRC of the UE 100 and the RRC of the eNB 200, the UE 100 is in an RRC connected mode, otherwise the UE 100 is in an RRC idle mode.

A NAS (Non-Access Stratum) layer positioned above the RRC layer performs a session management, a mobility management and the like.

### (Downlink Channel Configuration)

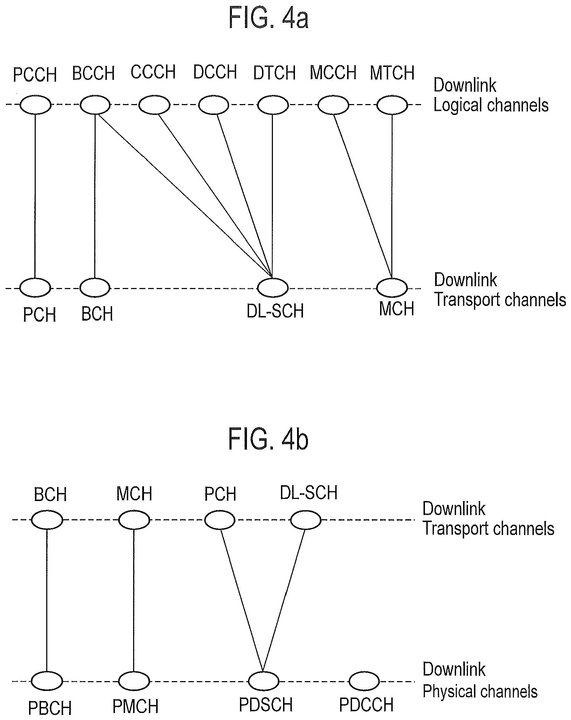

Fig. 4 is a diagram illustrating a downlink channel configuration in the LTE system.

Fig. 4(a) illustrates mapping between logical channels (Downlink Logical Channels) and transport channels (Downlink Transport Channels).

As illustrated in Fig. 4(a), Paging Control Channel (PCCH) is a logical channel for transferring paging information and system information change notifications. The PCCH is mapped to a Paging Channel (PCH) that is a transport channel.

A Broadcast Control Channel (BCCH) is a logical channel for system information. The BCCH is mapped to a Downlink Shared Channel (DL-SCH) or a Broadcast Control Channel (BCH) that is a transport channel.

A Common Control Channel (CCCH) is a logical channel for transmission control information between the UE 100 and the eNB 200. The CCCH is used in a case where the UE 100 does not have the RRC connection with the network. The CCCH is mapped to the DL-SCH.

A Dedicated Control Channel (DCCH) is a logical channel for transmitting an individual piece of control information between the UE 100 and the network. The DCCH is used in a case where the UE 100 has the RRC connection. The DCCH is mapped to the DL-SCH.

A Dedicated Traffic Channel (DTCH) is an individual logical channel for transmitting the data. The DTCH is mapped to the DL-SCH.

A Multicast Control Channel (MCCH) is a logical channel for one-to-many (broadcast/multicast) transmission. The MCCH is used for transmitting MBMS control information for a Multicast Traffic Channel (MTCH) from the network to the UE 100. The MCCH is mapped to a Multicast Channel (MCH) that is a transport channel.

The MTCH is a logical channel for one-to-many (broadcast/multicast) data transmission from the network to the UE 100. The MTCH is mapped to the MCH.

Fig. 4(b) illustrates mapping between transport channels (Downlink Transport Channels) and physical channels (Downlink Physical Channels).

As illustrated in Fig. 4(b), the BCH is mapped to a Physical Broadcast channel (PBCH).

The MCH is mapped to a Physical Multicast Channel (PMCH). The MCH supports the MBSFN transmission over a plurality of cells.

The PCH and the DL-SCH are mapped to a Physical Downlink Shared Channel (PDSCH). The DL-SCH supports the HARQ, link adaptation, and dynamic resource allocation.

A Physical Downlink Control Channel (PDCCH) carries resource allocation information related to the PDSCH (DL-SCH, PCH), HARQ information related to the DL-SCH, and the like. Also, the PDCCH carries an uplink scheduling grant.

### (Configuration of radio frame)

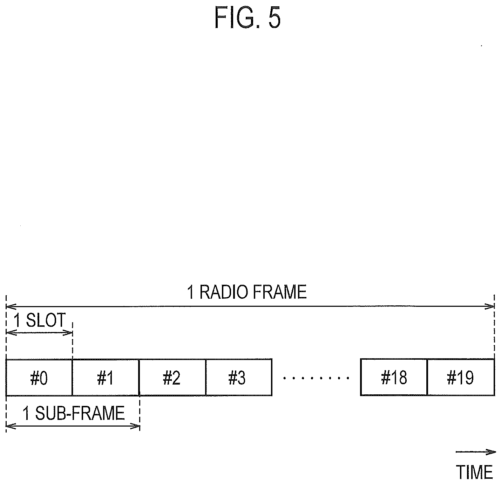

FIG. 5 is a configuration diagram of a radio frame used in the LTE system. In the LTE system, OFDMA (Orthogonal Frequency Division Multiplexing Access) is applied to a downlink, and SC-FDMA (Single Carrier Frequency Division Multiple Access) is applied to an uplink, respectively.

As illustrated in FIG. 5, a radio frame is configured by 10 subframes arranged in a time direction. Each subframe is configured by two slots arranged in the time direction. Each subframe has a length of 1 ms and each slot has a length of 0.5 ms. Each subframe includes a plurality of resource blocks (RBs) in a frequency direction (not shown), and a plurality of symbols in the time direction. Each resource block includes a plurality of subcarriers in the frequency direction. One symbol and one subcarrier forms one resource element. Of the radio resources (time and frequency resources) assigned to the UE 100, a frequency resource can be identified by a resource block and a time resource can be identified by a subframe (or a slot).

In the downlink, a section of several symbols at the head of each subframe is a control region used as a PDCCH for mainly transmitting a control signal. Furthermore, the other portion of each subframe is a region available as a PDSCH for mainly transmitting downlink data. Furthermore, in each subframe, a downlink reference signal such as a cell specific reference signal (CRS) is arranged.

In the uplink, both ends in the frequency direction of each subframe are control regions used as a physical uplink control channel (PUCCH) for mainly transmitting an uplink control signal. Furthermore, the other portion of each subframe is a region available as a physical uplink shared channel (PUSCH) for mainly transmitting uplink data. Further, in the downlink, an MBSFN subframe, which is a subframe for MBSFN transmission, may be configured.

### (Configuration of user terminal)

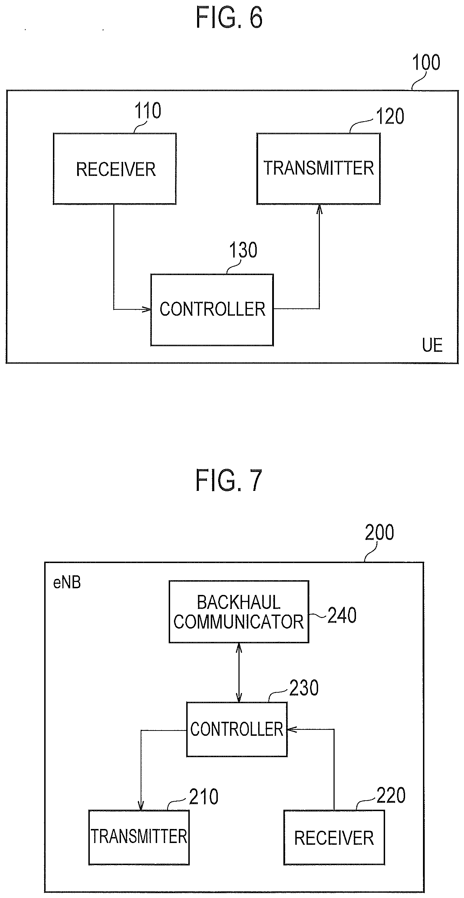

FIG. 6 is a block diagram of the UE 100 (user terminal) according to the embodiments.

As illustrated in FIG. 6, the UE 100 includes a receiver 110, a transmitter 120, and a controller 130.

The receiver 110 performs various types of reception under the control of the controller 130. The receiver 110 includes an antenna and a receiving machine. The receiving machine converts a radio signal received by the antenna into a baseband signal (reception signal) and outputs it to the controller 130.

The transmitter 120 performs various types of transmission under the control of the controller 130. The transmitter 120 includes an antenna and a transmitting machine. The transmitting machine converts a baseband signal (transmission signal) output from the controller 130 into a radio signal and transmits it from the antenna.

The controller 130 performs various controls in the UE 100. The controller 130 includes a processor and a memory. The memory stores programs executed by the processor and information used for processing by the processor. The processor includes a baseband processor that performs modulation and demodulation of the baseband signal, performs encoding and decoding, and the like, and a CPU (Central Processing Unit) that executes various programs by executing a program stored in the memory. The processor may include a codec for encoding / decoding audio / video signals. The processor executes various processes described later and various communication protocols described above.

### (Configuration of base station)

FIG. 7 is a block diagram of the eNB 200 (base station) according to the embodiments.

As illustrated in FIG. 5, the eNB 200 includes a transmitter 210, a receiver 220, a controller 230, and a backhaul communication unit 240.

The transmitter 210 performs various transmissions under the control of the controller 230. The transmitter 210 includes an antenna and a transmitting machine. The transmitting machine converts a baseband signal (transmission signal) output from the controller 230 into a radio signal and transmits it from the antenna.

The receiver 220 performs various types of reception under the control of the controller 230. The receiver 220 includes an antenna and a receiving machine. The receiving machine converts a radio signal received by the antenna into a baseband signal (reception signal) and outputs it to the controller 230.

The controller 230 performs various controls in the eNB 200. The controller 230 includes a processor and a memory. The memory stores programs executed by the processor and information used for processing by the processor. The processor includes a baseband processor that performs modulation and demodulation of the baseband signal, performs encoding and decoding, and the like, and a CPU (Central Processing Unit) that executes various programs by executing a program stored in the memory. The processor executes various processes described later and various communication protocols described above.

The backhaul communication unit 240 is connected to the neighboring eNB via the X2 interface, and is connected to the MME/S-GW 300 via the S1 interface. The backhaul communication unit 240 is used for communication performed on the X2 interface, communication performed on the S1 interface, and the like.

### (An Example of SC-PTM Transmission)

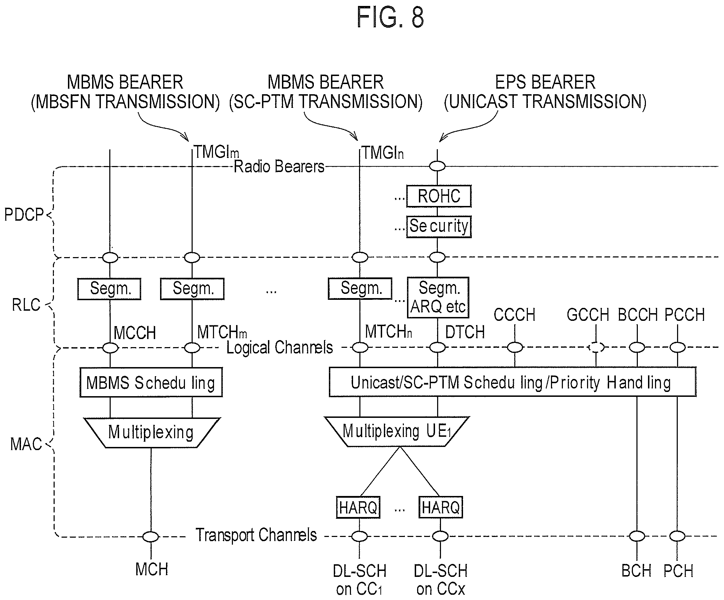

Fig. 8 is a diagram for describing an example of the SC-PTM transmission according to the embodiments. Here, processing in the eNB 200 will be mainly described. The eNB 200 according to the embodiments provides a group communication service (multicast service) over the SC-PTM transmission.

As illustrated in Fig. 8, the controller 230 of the eNB 200 (for example, the RRC layer) performs processing of transmitting SC-PTM setting information related to a setting of the SC-PTM transmission via a Group Contol Channel (GCCH) that is a new logical channel mapped to the DL-SCH. Details of the SC-PTM setting information will be described later.

The controller 230 of the eNB 200 (for example, the RRC layer) performs processing of transmitting GCCH setting information related to a setting of the GCCH via the BCCH. Details of the GCCH setting information will be described later.

An MBMS bearer to which the SC-PTM transmission is applied is associated with a Temporary Mobile Group Identity (TMGI) indicating the group communication service (MBMS service). Here, the MBMS bearer is a bearer for broadcast/multicast established between the UE 100 and the BM-SC 22. For example, for a certain MBMS service, an IP multicast bearer is established between the eNB 200 and the MBMS GW 21, and an MBMS PTM radio bearer is established between the eNB 200 and the UE 100.

The MBMS bearer to which the SC-PTM transmission is applied is subjected to segmentation in the RLC layer, and then is mapped to the MTCH that is a logical channel. Incidentally, for the SC-PTM transmission, an Unacknowledged Mode (UM) is applied in the RLC layer, and ARQ processing does not have to be applied. The MTCH exists for each TMGI. That is, the TMGI is associated with an LCID that is an identifier of a logical channel.

An Evolved Packet System (EPS) bearer to which the unicast transmission is applied is subjected to ROHC processing and Security processing in the PDCP layer, and is subjected to segmentation and ARQ processing in the RLC layer, and then is mapped to the DTCH that is a logical channel. Here, the EPS bearer is a bearer for unicast, which is established between the UE 100 and the P-GW 23.

The controller 230 (MAC layer) of the eNB 200 performs unicast/SC-PTM scheduling and priority control (Priority Handling) for each logical channel of the MTCH, DTCH, CCCH, GCCH, BCCH, and PCCH. Also, the controller 230 (MAC layer) of the eNB 200 multiplexes the MTCH and the DTCH (Multiplexing), and applies HARQ processing, and then performs mapping to the DL-SCH of each component carrier (CC).

Further, the eNB 200 may provide a broadcast/group communication service over the MBSFN transmission. The controller 230 (MAC layer) of the eNB 200, for the MCCH and the MTCH, performs MBMS scheduling with reference to MBMS scheduling information received from the MCE 11, and then performs multiplexing (Multiplexing), and mapping to the MCH.

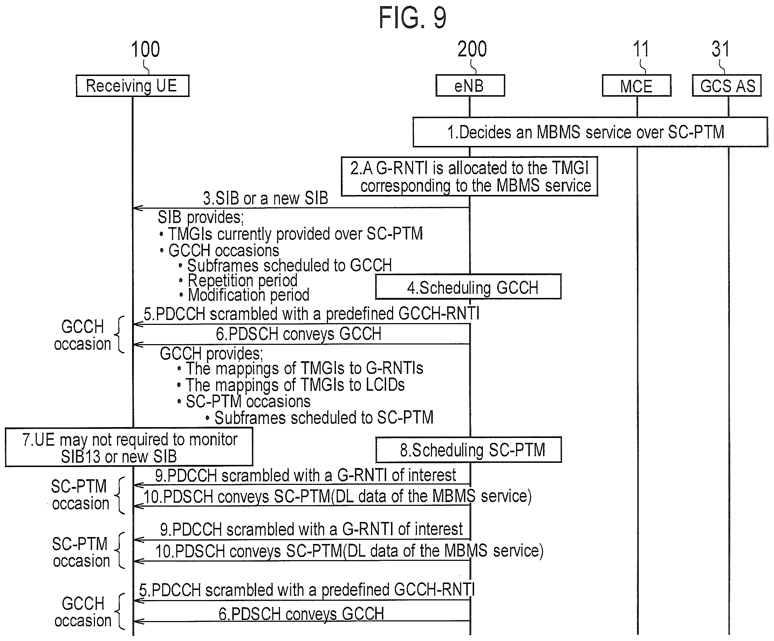

Fig. 9 is a sequence diagram illustrating an example of a SC-PTM control procedure according to the embodiments.

As illustrated in Fig. 9, in step 1, the eNB 200, the MCE 11, or the GCS AS 31, determines to provide the MBMS service (group communication service) over the SC-PTM transmission. Alternatively, the determination may be performed by the MME 300 or the BM SC 22.

In step 2, the eNB 200 allocates a Group-Radio Network Temporary Identifier (G-RNTI) to the TMGI corresponding to the MBMS service.

In step 3, the eNB 200 transmits the GCCH setting information related to the GCCH via the BCCH. Specifically, the eNB 200 transmits the GCCH setting information by a System Information Block (SIB) type 13 or a new SIB.

The GCCH setting information may include the TMGI of all group communication services being provided over the SC-PTM transmission in the cell of the eNB 200 (TMGIs currently provided over SC-PTM). Thus, the UE 100 receiving the GCCH setting information can determine to receive the GCCH, in a case where the TMGI in which the UE 100 has an interest is included in the GCCH setting information.

The GCCH setting information includes "GCCH occasions". The "GCCH occasions" include information indicating possible subframes in which the GCCH is transmitted (Subframes scheduled to GCCH). Thus, the UE 100 receiving the GCCH setting information can appropriately receive the GCCH when determining to receive the GCCH.

Also, the "GCCH occasion" includes a modification period (Modification period) indicating a period during which the GCCH (SC-PTM setting information) is not changed, and a repetition period (Repetition period) indicating a period during which the same GCCH (SC-PTM setting information) is repeatedly transmitted within the "Modification period". Thus, the UE 100 receiving the GCCH setting information can omit monitoring of an unnecessary GCCH, so that power consumption can be reduced.

The eNB 200 preferably keeps an SC-PTM bearer unchanged within the "Modification period". The SC-PTM bearer is the MBMS bearer (or radio bearer) to which the SC-PTM transmission is applied.

In step 4, the eNB 200 performs scheduling of the GCCH in accordance with the "Modification period" and the "Repetition period" (and/or the "GCCH occasions").

In step 5, the eNB 200, in the "GCCH occasions" (specifically, the possible subframes in which the GCCH is transmitted), transmits first resource allocation information (Downlink Contol Information (DCI)) for transmitting the SC-PTM setting information, via the PDCCH. The first resource allocation information includes information indicating an allocation resource block for the PDSCH in the subframe.

For transmission of the first resource allocation information, a common RNTI (GCCH-RNTI) is applied to a plurality of multicast groups. Specifically, the PDCCH is scrambled/masked by using the GCCH-RNTI. The "GCCH-RNTI" may be an RNTI predefined in the UE 100, or may be set in the UE 100 by the eNB 200. Alternatively, for transmission of the first resource allocation information, an RNTI specific to the multicast group (G-RNTI) may be applied.

In step 6, the eNB 200 transmits the SC-PTM setting information related to the setting of the SC-PTM transmission, via the GCCH. As described above, the GCCH is mapped to the PDSCH (DL-SCH).

The SC-PTM setting information includes information indicating a correspondence (mapping) between the TMGI indicating the MBMS service (group communication service) and the Group-Radio Network Temporary Identifier (G-RNTI) used for providing the MBMS service. Thus, the UE 100 receiving the SC-PTM setting information can grasp the G-RNTI allocated to the TMGI in which the UE 100 has an interest.

Also, the SC-PTM setting information includes information indicating a correspondence (mapping) between the TMGI indicating the MBMS service (group communication service) and the identifier of the logical channel (LCID) used for providing the MBMS service. Thus, the UE 100 receiving the SC-PTM setting information can grasp the LCID allocated to the TMGI in which the UE 100 has an interest.

Further, the SC-PTM setting information includes "SC-PTM occasions". The "SC-PTM occasions" include information indicating possible subframes in which multicast data (SC-PTM data) is transmitted over the SC-PTM transmission (Subframes scheduled to SC-PTM). Thus, the UE 100 receiving the SC-PTM setting information can grasp timing (subframe) when the SC-PTM data should be received.

Incidentally, in a case where Semi-Persistent Scheduling (SPS) is applied to the SC-PTM transmission, the SC-PTM setting information may include setting information of the SPS (SPS Config.). The "SPS Config." includes an SPS period (semiPersistSchedInterval) and an SPS C-RNTI.

In step 7, the UE 100 receiving the SC-PTM setting information (GCCH) does not have to receive the GCCH setting information (SIB13 or a new SIB), as far as SIB update is not performed. Also, once the UE 100 receives the SC-PTM setting information (GCCH) within the "Modification period", the UE 100 does not have to monitor the GCCH within the "Modification period".

In step 8, the eNB 200 performs scheduling of SC-PTM.

In step 9, the eNB 200, in the "SC-PTM occasions" (possible subframes in which the SC-PTM data is transmitted), transmits second resource allocation information (DCI) for transmitting the SC-PTM data corresponding to a particular service (TMGI), via the PDCCH. The second resource allocation information includes information indicating an allocation resource (and MCS) used for transmitting the SC-PTM data.

For transmission of the second resource allocation information, the G-RNTI applied varies for each multicast group. Specifically, the PDCCH is scrambled/masked by using the G-RNTI corresponding to the particular service (TMGI).

The eNB 200 may arrange the second resource allocation information to be transmitted by applying the G-RNTI, in a group search space in the PDCCH. The group search space is a new search space different from a common search space and a UE specific search space. The UE 100 attempting to receive the SC-PTM data corresponding to the particular service (TMGI) performs blind decoding by the G-RNTI in the group search space.

In step 10, the eNB 200 transmits the SC-PTM data corresponding to the particular service (TMGI) via the PDSCH (DL-SCH).

### [First Embodiment]

Hereinafter, a first embodiment will be described. In the first embodiment, it is assumed that not only a UE 100 in an RRC connected mode, but also the UE 100 in an RRC idle mode can receive SC-PTM transmission.

### (Summary of Cell Reselection)

The UE 100 according to the first embodiment performs cell reselection in the RRC idle mode. Specifically, the UE 100 selects a target cell to be used as a serving cell from among a plurality of cells operated at different frequencies. The UE 100, in a case where a start condition is satisfied, measures qualities of neighboring cells adjacent to a current serving cell, and selects the target cell to be used as the serving cell from among cells that satisfy a selection condition.

First, the start condition is as follows.
(A1) Frequency having a higher priority than a frequency priority of the current serving cell
   - the UE 100 always measures a quality of a frequency having a higher priority.
(A2) Frequency having an equal priority or a lower priority than the frequency priority of the current serving cell
   - the UE 100, in a case where a quality of the current serving cell is lower than a predetermined threshold, measures a quality of the frequency having the equal priority or the lower priority.

Second, a selection condition is as follows.
(B1) A frequency priority of a neighboring cell is higher than a priority of the current serving cell
   - the UE 100 selects a cell as the target cell, the cell satisfying a relationship of Squal > Thresh_{X},High_{Q} over a predetermined period (Treselection_{RAT}), or the cell satisfying a relationship of Srxlev > Thresh_{X,HighP} over a predetermined period (Treselection_{RAT}). In such a case, criteria that should be satisfied by the neighboring cells are also referred to as "S-criteria".

   However, Squal represents a cell selection quality level, and is calculated by Squal = Q_{qualmeas} - (Q_{qualmin} + Q_{qualminoffset}) - Qoffsetₜₑₘₚ. Q_{qualmeas} is a quality level (RSRQ) of the neighboring cell, Q_{qualmin} is a required minimum quality level, Q_{qualminoffset} is a predetermined offset regularly applied to the neighboring cell, and Qoffsetₜₑₘₚ is an offset temporarily applied to the neighboring cell. Thresh_{X},High_{Q} is a predetermined threshold.
   Srxlev represents a cell selection reception level, and is calculated by Srxlev = Qᵣₓₗₑᵥₘₑₐₛ - (Qᵣₓₗₑᵥₘᵢₙ + Q_{rxlevminoffset}) - Pcompensation - Qoffsetₜₑₘₚ- Qᵣₓₗₑᵥₘₑₐₛ is a reception level (RSRP) of the neighboring cell, Qᵣₓₗₑᵥₘᵢₙ is a required minimum reception level, Q_{rxlevminoffset} is a predetermined offset regularly applied to the neighboring cell, Pcompensation is a parameter related to performance of uplink, and Qoffsetₜₑₘₚ is an offset temporarily applied to the neighboring cell. Thresh_{X,HighP} is a predetermined threshold.
(B2) The frequency priority of the neighboring cell is equal to the priority of the current serving cell
   - the UE 100 calculates a ranking Rₛ of the current serving cell and a ranking Rₙ of the neighboring cell, and selects a cell having the ranking Rₙ higher than Rₛ over the predetermined period (Treselection_{RAT}), as the target cell. In such a case, criteria that should be satisfied by the neighboring cells are also referred to as "R-criteria".

   However, Rₛ is calculated by Rₛ = Qₘₑₐₛ,ₛ + Q_{Hyst} - Qoffsetₜₑₘₚ. Rₙ is calculated by Rₙ = Qₘₑₐₛ,ₙ - Qoffset - Qoffsetₜₑₘₚ. Qₘₑₐₛ,ₛ is a reception level (RSRP) of the current serving cell, and Qₘₑₐₛ,ₙ is a reception level (RSRP) of the neighboring cell. Q_{Hyst} is a hysteresis value to make it easier for the current serving cell to be reselected as the target cell. Qoffsetₜₑₘₚ is an offset temporarily applied to the current serving cell and the neighboring cell.
(B3) The frequency priority of the neighboring cell is lower than the priority of the current serving cell.
   - the UE 100 selects the target cell from among the neighboring cells by a method similar to (B1) described above, on the assumption that Squal < Thresh_{Serving,LowQ} is satisfied over the predetermined period (Treselection_{RAT}), or Srxlev < Tbresh_{Serving,LowP} is satisfied over the predetermined period (Treselection_{RAT}).

   However, Thresh_{Serving,LowQ} and Thresh_{Serving,LowP} are predetermined thresholds, similarly to Thresh_{X},High_{Q} and Thresh_{X,HighP}.

Incidentally, various parameters to be used for selecting the target cell are included in system information (System Information Block (SIB)) reported from an eNB 200. The various parameters include the frequency priority (cellReselectionPriority), the predetermined period (Treselection_{RAT}), the various offsets (Q_{qualminoffset}, Q_{rxlevminoffset}, Qoffsetₜₑₘₚ, Q_{Hyst}, Qoffset), and the various thresholds (Thresh_{X,HighQ}, Thresh_{X,HighP}, Thresh_{Serving,LowQ}, Thresh_{Serving,LowP}).

### (Operation according to First Embodiment)

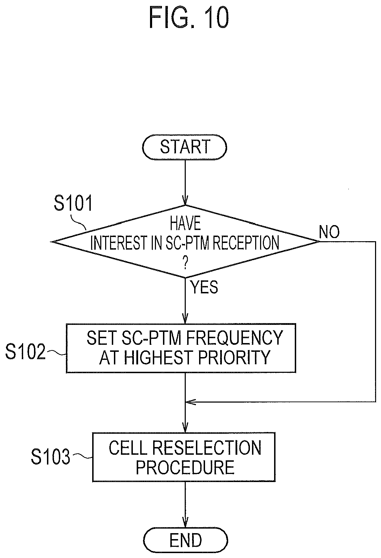

Fig. 10 is a diagram illustrating operation of the UE 100 according to the first embodiment.

As illustrated in Fig. 10, in step S101, the UE 100 determines whether or not to have an interest in reception of a group communication service provided in one frequency (SC-PTM frequency) over the SC-PTM transmission. "Have an interest in reception of a group communication service" can include not only a case where the group communication service is actually received but also a case where the group communication service is not received and the reception is desired. Whether or not to have an interest in reception of the group communication service, is decided in accordance with an instruction from an upper layer (application layer or the like), for example. The UE 100 may specify the SC-PTM frequency on the basis of neighboring cell SC-PTM information to be described in a second embodiment.

In a case where the UE 100 does not have an interest in reception of the group communication service (step S101: NO), in step S103, the UE 100 performs the cell reselection procedure described above.

On the other hand, in a case where the UE 100 has an interest in reception of the group communication service (step S101: YES), in step S102, the UE 100 sets the priority of the one frequency (SC-PTM frequency) at the highest priority. Then, the UE 100 performs the cell reselection procedure described above (step S103).

Alternatively, in step S102, the UE 100, when prioritizing SC-PTM reception rather than normal unicast data communication, may set the one frequency at the highest priority. Also, the UE 100 may set a SC-PTM frequency corresponding to an interested TMGI at the highest priority.

In step S102, the UE 100, for a SC-PTM provision cell (frequency), may execute the cell reselection procedure by applying "special cell reselection parameters". Here, the "special cell reselection parameter s" are criteria (Offsets of S-criteria and R-criteria, or the like) of RSRQ (and RSRP) considering MCS (≈ normal reception SINR) of the SC-PTM transmission. The special cell reselection parameters may be reported from a base station. By applying the cell reselection criteria, a certain reception quality can be guaranteed.

In this way, the UE 100, when having an interest in reception of the group communication service provided in one frequency (SC-PTM frequency) over the SC-PTM transmission, preferentially selects a cell belonging to the one frequency (SC-PTM frequency) during the cell reselection. Therefore, the group communication service provided over the SC-PTM transmission can be continuously received in the RRC idle mode.

### [Modification of First Embodiment]

In the first embodiment, a case has not been assumed where the UE 100 also has an interest in the group communication service provided over the MBSFN transmission. However, in a case where the same group communication service (the same TMGI) is provided over the SC-PTM transmission and the MBSFN transmission, at different frequencies, it is a problem that which one of a frequency (SC-PTM frequency) of the SC-PTM transmission and a frequency (MBSFN frequency) of the MBSFN transmission is prioritized.

In a present modification, the UE 100, in a case where the same group communication service is provided at different frequencies over the SC-PTM transmission and the MBSFN transmission, determines which one of the SC-PTM frequency and the MBSFN frequency is prioritized during the cell reselection.

When it is assumed that the group communication service is basically provided over the MBSFN transmission, the fact that the same group communication service is provided over the SC-PTM transmission and the MBSFN transmission, can be regarded that it is a state in which the MBSFN frequency is congested and is being switched to the SC-PTM transmission. Accordingly, in a case where the UE 100 has an interest in both the SC-PTM transmission and the MBSFN transmission, a priority of the SC-PTM transmission (SC-PTM frequency) is preferably made higher than a priority of the MBSFN transmission (MBSFN frequency). Alternatively, when it is assumed that the group communication service is basically provided over the SC-PTM transmission, contrary to the above, the priority of the MBSFN transmission (MBSFN frequency) may be made higher than the priority of the SC-PTM transmission (SC-PTM frequency). Such a policy (a network operation policy of whether the group communication service is basically provided over the MBSFN transmission or provided over the SC-PTM transmission) may be provided from the network (eNB 200, MME 300, BM-SC 22, GCS-AS 31) to the UE 100.

Alternatively, the UE 100, on the basis of "SC-PTM Availability Information" to be described in a fifth embodiment, determines transmission over which service provision is continued, out of the SC-PTM transmission and the MBSFN transmission, and determines to make the frequency priority higher at which the service provision is continued.

### [Second Embodiment]

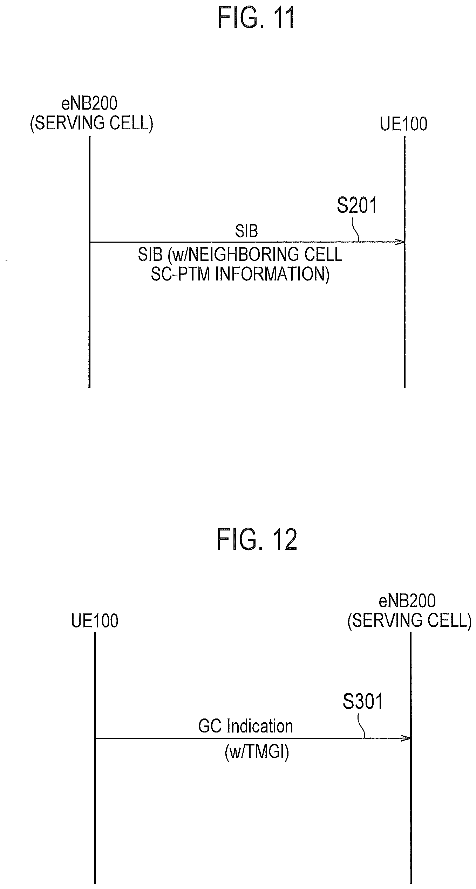

A second embodiment will be described mainly in differences from the first embodiment. Fig. 11 is a diagram illustrating operation according to the second embodiment. The UE 100 is in the RRC connected mode or in the RRC idle mode in a cell (serving cell) of the eNB 200.

As illustrated in Fig. 11, in step S201, the eNB 200 reports (broadcasts) system information (SIB) including information related to the group communication service provided over the SC-PTM transmission in a neighboring cell (neighboring cell SC-PTM information), in the cell of the eNB 200.

The neighboring cell may be a cell managed by the eNB 200, or may be a cell managed by another eNB. In a case where the neighboring cell is managed by the other eNB, the eNB 200 may acquire the information related to the group communication service provided over the SC-PTM transmission in the neighboring cell from the other eNB (or the MCE 11).

The system information (SIB) is transmitted on the BCCH. The neighboring cell SC-PTM information included in the system information (SIB) includes at least one of an identifier (TMGI) indicating the group communication service, an identifier of the neighboring cell (cell identifier), and information indicating a frequency to which the neighboring cell belongs.

The UE 100 receiving the system information (SIB) from the serving cell can grasp the group communication service provided over the SC-PTM transmission in the neighboring cell, on the basis of the neighboring cell SC-PTM information included in the system information (SIB).

### [Third Embodiment]

A third embodiment will be described mainly in differences from the first embodiment and the second embodiment. Fig. 12 is a diagram illustrating operation according to the third embodiment.

As illustrated in Fig. 12, in step S301, the UE 100 transmits a group communication notification (GC Indication) including an identifier (TMGI) indicating a group communication service of which the UE 100 has an interest in reception, to the eNB 200. The "GC Indication" is a kind of RRC message. The UE 100 may transmit the "GC Indication" in response to a change in the group communication service of which the UE 100 has an interest in reception. Alternatively, the UE 100, in a case where the interest of the UE 100 in the group communication service changes (has an interest or lose an interest), may transmit the "GC Indication". Alternatively, the UE 100 may transmit the "GC Indication" in response to an inquiry from a cell.

The UE 100 may transmit the "GC Indication" to the eNB 200 on the basis of the neighboring cell SC-PTM information received from the eNB 200 (see second embodiment). For example, the UE 100, when determining that the group communication service of which the UE 100 has an interest in reception is provided in the neighboring cell, may transmit the "GC Indication" to the eNB 200 (serving cell). In this case, the eNB 200 may perform handover of the UE 100 from the serving cell to the neighboring cell.

The UE 100 may include information indicating which one of reception of the SC-PTM transmission and reception of the unicast transmission is prioritized, in the "GC Indication". For example, the UE 100, when prioritizing reception of the group communication service of which the UE 100 has an interest in reception rather than reception of a unicast bearer, includes information indicating that the SC-PTM reception is prioritized, in the "GC Indication". Thus, the eNB 200 can grasp a priority of the SC-PTM reception. Incidentally, the UE 100, when the priority changes due to some reason (for example, an application using unicast starts), may transmit the "GC Indication".

### [Modification of Third Embodiment]

In the third embodiment, an MBMS interest notification (MBMS Interest Indication) that is an existing RRC message has not been considered. The "MBMS Interest Indication" can include information indicating an MBMS frequency at which the UE 100 has an interest in MBMS reception, and information indicating that the MBMS reception is prioritized rather than unicast reception. For example, the eNB 200, on the basis of the "MBMS Interest Indication", performs control such that, when the UE 100 in the RRC connected mode has an interest in the MBMS reception at a current frequency, handover to another frequency is not performed, and when the UE 100 has an interest in MBMS provided at the other frequency, handover to the other frequency is performed.

The UE 100 can transmit the "MBMS Interest Indication" in response to success of connection establishment, withdrawal/transition from the service area, session start/end, change in interest, priority change between MBMS and unicast, change in PCell that broadcasts SIB15, or the like.

However, in a case where the same group communication service (the same TMGI) is provided over the SC-PTM transmission and the MBSFN transmission, at different frequencies, a case can occur where both a condition for transmitting the "GC Indication" and a condition for transmitting the "MBMS Interest Indication" are satisfied.

As described above, when it is assumed that the group communication service is basically provided over the MBSFN transmission, the fact that the same group communication service is provided over the SC-PTM transmission and the MBSFN transmission, can be regarded that it is a state in which the MBSFN frequency is congested and is being switched to the SC-PTM transmission.

Accordingly, in a case where both the condition for transmitting the "GC Indication" and the condition for transmitting the "MBMS Interest Indication" are satisfied, the UE 100 preferably prioritizes transmission of the "GC Indication". For example, even in a case where the condition for transmitting the "MBMS Interest Indication" is satisfied, when the condition for transmitting the "GC Indication" is satisfied, the UE 100 does not transmit the "MBMS Interest Indication", and transmits the "GC Indication".

Alternatively, when it is assumed that the group communication service is basically is provided over the SC-PTM transmission, contrary to the above, the UE 100 preferably prioritizes transmission of the "MBMS Interest Indication". Such a policy (a network operation policy of whether the group communication service is basically provided over the MBSFN transmission or provided over the SC-PTM transmission) may be provided from the network (eNB 200, MME 300, BM-SC 22, GCS-AS 31) to the UE 100.

### [Fourth Embodiment]

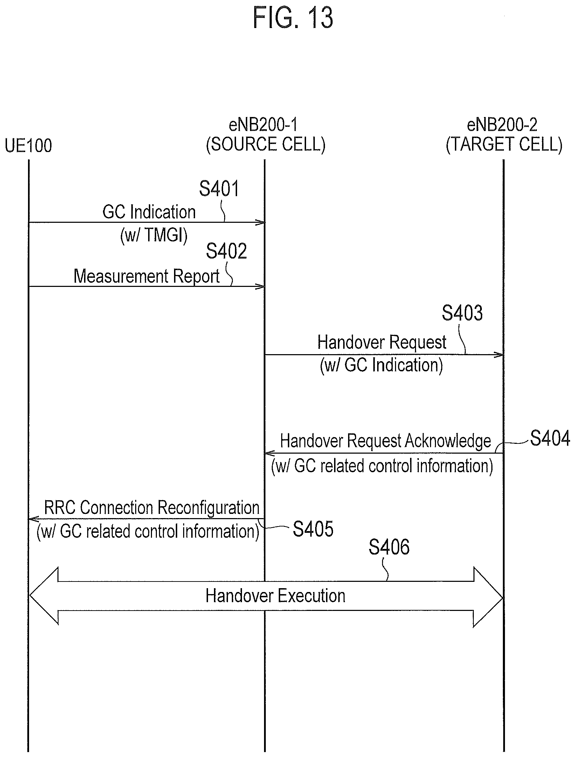

A fourth embodiment will be described mainly in differences from the first embodiment to the third embodiment. Fig. 13 is a diagram illustrating operation according to the fourth embodiment. In the fourth embodiment, a case is assumed where the UE 100 performs handover from an eNB 200-1 (source cell) to an eNB 200-2 (target cell).

As illustrated in Fig. 13, in step S401, the UE 100 transmits the "GC Indication" to the eNB 200-1. Here, it is assumed that the UE 100 has an interest in reception of a particular group communication service (TMGI). Specifically, the UE 100 receives a group communication service over the SC-PTM transmission (or the MBSFN transmission), in a cell of the eNB 200-1.

In step S402, the UE 100 transmits a measurement report (Measurement Report) to the eNB 200-1. The eNB 200-1 decides handover of the UE 100 to the eNB 200-2 (target cell) on the basis of the "Measurement Report".

In step S403, the eNB 200-1 transmits a handover request (Handover Request) message to the eNB 200-2 (target cell). The eNB 200-1 includes the "GC Indication" including an identifier (TMGI) indicating a group communication service of which the UE 100 has an interest in reception, in the "Handover Request" message. For example, the eNB 200-1 includes the "GC Indication" as part of UE context information, in the "Handover Request" message.

Here, it is assumed that the eNB 200-2 (target cell) provides the group communication service of which the UE 100 has an interest in reception, over the SC-PTM transmission. Alternatively, the eNB 200-2 (target cell) may provide the group communication service of which the UE 100 has an interest in reception, over the MBSFN transmission.

In step S404, the eNB 200-2 (target cell) determines to approve the "Handover Request" message, and transmits a handover request acknowledge (Handover Request Acknowledge) message to the eNB 200-1 (source cell). The "Handover Request Acknowledge" message includes a handover command (Handover Command) corresponding to an RRC container (transparent container) transparently transmitted to the UE 100.

The eNB 200-2, when providing the group communication service of which the UE 100 has an interest in reception in the cell of the eNB 200-2 (target cell), includes group communication control information (GC related control inoformation) related to the group communication service in the "Handover Command".

In a case where the target cell provides the group communication service over the SC-PTM transmission, the "GC related control inoformation" includes information for the UE 100 to receive the SC-PTM transmission from the target cell after the handover execution. Such information is, for example, at least one of information included in the GCCH of the target cell (SC-PTM setting information), and GCCH setting information (SIB) related to the GCCH.

In a case where the target cell provides the group communication service over the MBSFN transmission, the "GC related control inoformation" includes information for the UE 100 to receive the MBSFN transmission from the target cell after the handover execution. Such information is, for example, at least one of information included in SIB 13 of the target cell, and information included in the MCCH of the target cell.

In step S405, the eNB 200-1 transmits an "RRC Connection Reconfiguration" message including the "Handover Command" to the UE 100 in response to reception of the "Handover Request" message. The "Handover Command" includes the "GC related control information". The UE 100 receives the "RRC Connection Reconfiguration" message.

In step S406, the UE 100 executes handover from the eNB 200-1 (source cell) to the eNB 200-2 (target cell).

In this way, the UE 100 acquires the "GC related control inoformation" related to the group communication service provided by the target cell from the target cell via the source cell before the handover execution. Thus, the UE 100 can smoothly receive the group communication service of which the UE 100 has an interest in reception, from the eNB 200-2 (target cell), after the handover execution.

### [Modification 1 of Fourth Embodiment]

In the fourth embodiment described above, a case has not been considered where the target cell does not provide the group communication service of which the UE 100 has an interest in reception.

However, the eNB 200-2 (target cell), when determining that the group communication service of which the UE 100 has an interest in reception is not provided in the target cell, may notify the UE 100 of a negative acknowledgment via the eNB 200-1 (source cell). For example, the eNB 200-2 (target cell) includes information indicating that the group communication service of which the UE 100 has an interest in reception is not provided, in the "Handover Command".

Thus, the UE 100 determines to switch to the unicast transmission to receive data belonging to the group communication service, and may request a GGS AS 31 to establish a unicast bearer (EPS bearer). Thus, the UE 100 can continue reception of the group communication service.

### [Modification 2 of Fourth Embodiment]

In the fourth embodiment described above, the "MBMS Interest Indication" has not been considered in particular. On the current specification, the "MBMS Interest Indication" is included in the UE context information in the "Handover Request" message.

For this reason, the eNB 200-2 (target cell) receiving both the "GC Indication" and the "MBMS Interest Indication" from the UE 100 may include both the "GC Indication" and the "MBMS Interest Indication", in the "Handover Request" message.

Also, the eNB 200-2 (target cell) receiving the "Handover Request" message including both the "GC Indication" and the "MBMS Interest Indication" may consider both the "GC Indication" and the "MBMS Interest Indication" and determine the group communication service (or MBMS frequency) of which the UE 100 has an interest in reception.

The eNB 200-2 (target cell), when considering both the "GC Indication" and the "MBMS Interest Indication" and determining that the group communication service cannot be provided to the UE 100, may notify the UE 100 of a negative acknowledgment via the eNB 200-1 (source cell).

### [Modification 3 of Fourth Embodiment]

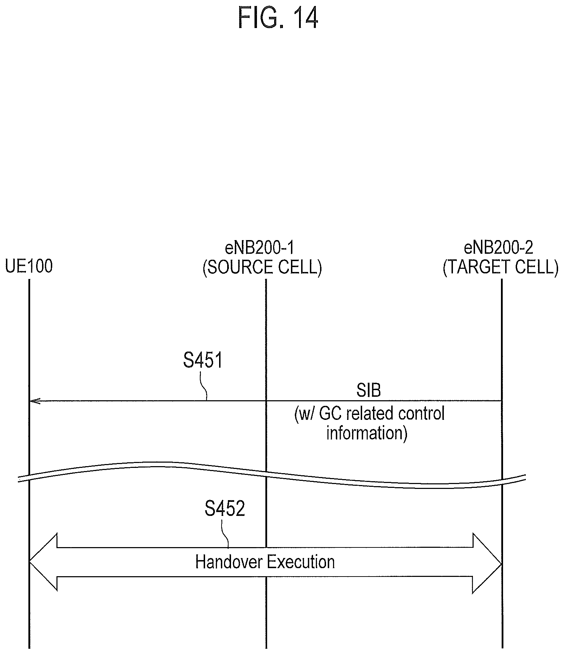

Fig. 14 is a diagram illustrating modification 3 of the fourth embodiment.

As illustrated in Fig. 14, in step S451, the UE 100 acquires the "GC related control inoformation" directly from the eNB 200-2 (target cell) without intervention of the eNB 200-1 (source cell).

For example, the UE 100 receives the SIB and the like transmitted from the eNB 200-2 (target cell) while existing in the eNB 200-1 (source cell), thereby acquiring the "GC related control inoformation" directly from the eNB 200-2 (target cell).

After the handover execution (step S452), the group communication service is received on the basis of the "GC related control inoformation" acquired in step S451.

### [Fifth Embodiment]

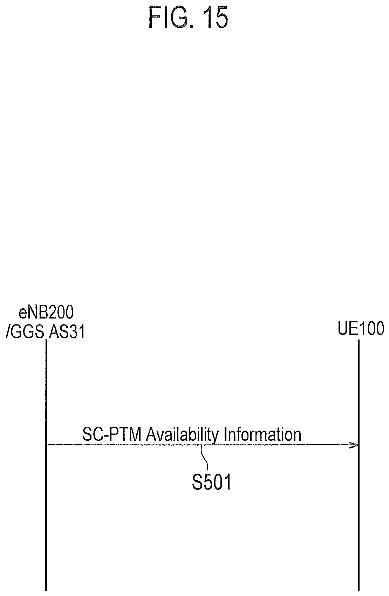

A fifth embodiment will be described mainly in differences from the first embodiment to the fourth embodiment. Fig. 15 is a diagram illustrating operation according to the fifth embodiment.

As illustrated in Fig. 15, in step S501, a network device (eNB 200, GGS AS 31, or the like) notifies the UE 100 of information related to presence or absence of provision of a particular group communication service over the SC-PTM transmission (SC-PTM Availability Information). The UE 100, on the basis of the "SC-PTM Availability Information", determines that data belonging to the particular group communication service should be received by which one of the SC-PTM transmission, the MBSFN transmission, and the unicast transmission.

The "SC-PTM Availability Information" is information indicating whether the particular group communication service (TMGI) of which the UE 100 has an interest in reception, is provided over the SC-PTM transmission or provided over the MBSFN transmission. In this case, the network device, on the basis of the "GC Indication" and the like, is required to grasp the particular group communication service of which the UE 100 has an interest in reception.

The "SC-PTM Availability Information" notification may be transferred to the UE 100 for each cell. In this case, the UE 100 can grasp whether the particular group communication service is provided over the SC-PTM transmission or provided over the MBSFN transmission, in the serving cell (or neighboring cell).

The UE 100, in a case where the particular group communication service is not provided over either the SC-PTM transmission or the MBSFN transmission, may perform processing of establishing a unicast bearer (EPS bearer) to receive data belonging to the particular group communication service.

Alternatively, the "SC-PTM Availability Information" is information indicating when provision of the particular group communication service over the SC-PTM transmission ends. The information may be information indicating provision end time of the particular group communication service, or may be information indicating time until provision end of the particular group communication service.

Even in a case where the SC-PTM transmission ends, the particular group communication service can be provided over the MBSFN transmission or the unicast transmission. Accordingly, the UE 100 switches to the MBSFN transmission or the unicast transmission before the SC-PTM transmission ends, thereby being able to continuously receive the particular group communication service.

The "SC-PTM Availability Information" may include information indicating when provision of the particular group communication service over the MBSFN transmission ends.

### [Sixth Embodiment]

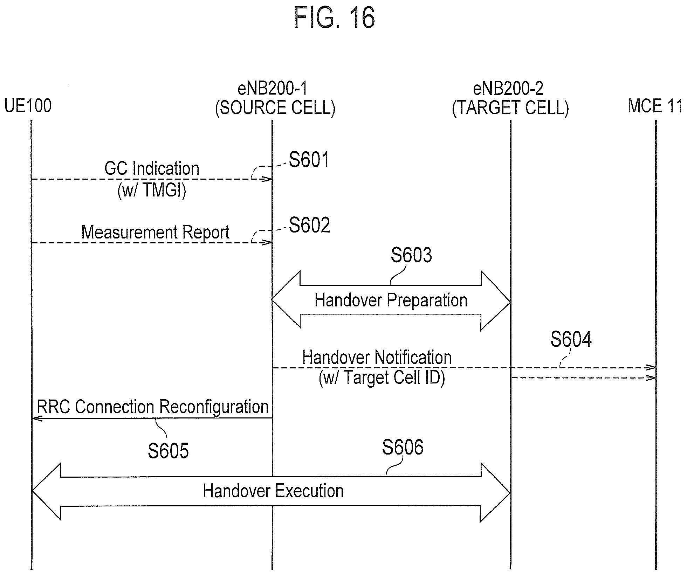

A sixth embodiment will be described mainly in differences from the first embodiment to the fifth embodiment. Fig. 16 is a diagram illustrating operation according to the sixth embodiment.

In step S601, the UE 100 transmits the "GC Indication" to the eNB 200-1. Here, it is assumed that the UE 100 has an interest in reception of a particular group communication service (TMGI). Specifically, the UE 100 receives a group communication service over the SC-PTM transmission (or the MBSFN transmission), in a cell of the eNB 200-1.

In step S602, the UE 100 transmits a measurement report (Measurement Report) to the eNB 200-1. The eNB 200-1 decides handover of the UE 100 to the eNB 200-2 (target cell) on the basis of the "Measurement Report".

In step S603, the eNB 200-1 (source cell) and the eNB 200-2 (target cell) perform handover preparation. Specifically, the "Handover Request" message and the "Handover Request Acknowledge" message are transmitted and received. Here, the "Handover Request" message may include the "GC Indication".

In step S604, the eNB 200-1 (source cell) notifies the MCE 11 (multicast control apparatus) of notification (Handover Notification) including information related to the target cell. The information related to the target cell is, for example, the cell ID of the target cell. The "Handover Notification" may include the TMGI of the group communication service of which the UE 100 has an interest in reception. Alternatively, instead of the eNB 200-1 (source cell), the eNB 200-2 (target cell) may provide the "Handover Notification" to the MCE 11.

The MCE 11, on the basis of the "Handover Notification", determines whether or not to provide the group communication service over the SC-PTM transmission or the MBSFN transmission, in the target cell. For example, in a case where the target cell does not support the SC-PTM transmission, the MCE 11 may determine to provide the group communication service of which the UE 100 has an interest in reception, over the MBSFN transmission, in the target cell. Alternatively, in a case where the target cell supports the SC-PTM transmission, the MCE 11 may determine to provide the group communication service of which the UE 100 has an interest in reception, over the SC-PTM transmission, in the target cell. Then, the MCE 11 performs control for the target cell to provide the group communication service of which the UE 100 has an interest in reception.

In step S606, the UE 100 executes handover from the eNB 200-1 (source cell) to the eNB 200-2 (target cell). The UE 100 can receive the group communication service from the target cell after the handover execution.

### [Other embodiments]

The first embodiment to the sixth embodiment described above may be independently implemented, or two or more embodiments may be combined to be implemented.

In each embodiment described above, the LTE system has been exemplified as a mobile communication system, and LTE communication has been exemplified as WWAN communication. However, the present invention is not limited to the LTE system. The present invention may be applied to a mobile communication system other than the LTE system.

### [Appendix]

### (Introduction)

As part of the GC eMBMS discussions the procedure for service continuity between MBMS and Unicast is documented and furthermore the enhancement in the MSI to support suspension is specified to take care on congestion situations. With the introduction of SC-PTM transmission, it is stated that one of the objectives is as follows:

Investigations could be performed in the following areas:
(a) Method for UE to receive the DL multicast over PDSCH that is intended for a group of users (i.e. users that have common interest on a particular service/content).
(b) Whether HARQ feedback and CSI report are still necessary for single-cell PTM transmission, and if so identify possible solutions.
(c) Service continuity aspects.

Therefore it is necessary to understand how service continuity among MBMS, SC-PTM and Unicast should be carried out esp. from the mobility perspective, which is the subject of this contribution.

### (Mobility considerations for service continuity)

Although it is yet to be decided which entity decides whether SC-PTM, MBSFN or Unicast should be used to provide the GC services of interest to the UE(s), it may be assumed that all 3 types of transmissions are possible and that service continuity among these transmissions needs to be clarified. The 3 types of mobility scenarios are depicted below which are applicable for both IDLE and CONN UEs.

Scenario 1: SC-PTM ←→ Unicast
Scenario 2: SC-PTM ←→ SC-PTM
Scenario 3: SC-PTM to MBSFN

### (Mobility in IDLE mode)

Since MBMS is already supported for IDLE UEs, there is no overriding reason not to support SC-PTM for IDLE UEs. (The study covers IDLE and Connected mode support.)

Therefore, all 3 scenarios above should be considered for IDLE UEs.

Before considering the details of the scenarios, it should be discussed whether the UE interested in GC services should be allowed to prioritize the SC-PTM frequency for reselection. This is similar to the decision made for MBMS.

Proposal 1: RAN2 should consider if IDLE UEs are allowed to prioritize the SC-PTM frequency to receive the GC service of interest.

### (Scenario1 & Scenario 2: SC-PTM → SC-PTM/Unicast)

The only sub-scenario to consider is the case when the UE is already receiving SC-PTM transmission for the GC services of interest and the UE reselects a neighbour cell that may also provide SC-PTM. In case SC-PTM is not provided in the neighbour cell, it is expected that the UE must transition to the connected mode in order to receive the service of interest via Unicast delivery. To support the make-before-break service reception, the UE should have a means to determine whether the service of interest is also provided by neighbour cells. Unlike the case for MBSFN, it isn't sufficient for the UE to determine whether the neighbour cells are part of the same MBSFN area since SC-PTM transmission is determined on a cell by cell basis. It should be considered if the serving cell could provide in SIB information on whether GC services are provided in neighbour cells. Without such information, the UE will need to directly monitor neighbour cells' SIB, possibly in another frequency. Otherwise, the UE may simply assume that SC-PTM is not provided in any of the neighbour cells and transition to CONNECTED to receive the service of interest via Unicast.

Proposal 2: RAN2 should consider if the serving cell should provide in SIB GC services that are provided by neighbour cells via SC-PTM.

To support service continuity, it should also be considered whether IDLE UEs under medium to high mobility should depend on SC-PTM transmission, esp. if neighbour cells do not support SC-PTM transmissions or if the serving cell is a small cell. However, this may be left for UE implementation.

Proposal 3: It is up to UE implementation whether IDLE UEs should receive GC services of interest via an existing SC-PTM transmission or Unicast (after transitioning to CONN).

### (Scenario 3: SC-PTM ←→ MBSFN)

Scenario 3 is mainly applicable between MBSFN area boundaries, but it is still a scenario that needs to be addressed so that the UE behaviour is well understood. If the IDLE UE is receiving SC-PTM transmission while the neighbour cell(s) provide GC services of interest via MBSFN, then it may be assumed that the UE may switch over from SC-PTM to MBSFN. But this means the UE must monitor both the SIB related to SC-PTM as well as SIB13/SIB15 to figure out if the services of interest may be available by broadcast (either SC-PTM or MBSFN).

Observation 1: For reselection, it is up to UE to determine if the GC service of interest is provided by MBSFN in neighbour cells by monitoring SIB13/SIB15.

### (Mobility in connected mode)

In case the UE is already receiving data delivery via SC-PTM transmissions, it is assumed the service of interest is not available via MBSFN in the area. However, since SC-PTM is meant for a single cell, the question is what happens if the serving cell handovers the UE to a neighbour cell due to mobility. This may depend on whether the target cell also provides the same service over SC-PTM. Before discussing the scenarios, it should be clarified whether the serving cell should know the UE's interest in receiving the service of interest via SC-PTM transmissions. Currently it is stated that:"When a GCS UE moves between areas where its MBMS broadcast bearers are available or not, the UE informs the GCS AS via application signalling that it changes from MBMS broadcast bearer reception to non-reception, or vice versa, the GCS AS activates or deactivates the downlink application signalling and data transfer via the UE individual EPS bearer(s) as appropriate."

In the case of MBMS broadcast using MBSFN, it is assumed that the MBSFN area is sufficiently large such that transitions from MBMS broadcast to Unicast delivery doesn't happen frequently. However, SC-PTM transmission is meant to allow the eNB the flexibility to balance the resources among Unicast bearers and MBMS bearer for SC-PTM, it may not be sufficient to only depend on the GCS AS to inform the eNB of the UE's need to receive services of interest via either Unicast or SC-PTM. Furthermore, if the UE is receiving MBSFN, but the service is suspended the serving cell (and neighbour cells) may choose to provide the same service over SC-PTM instead. In this case, the UE may not inform the GCS AS of the change to SC-PTM delivery since both MBSFN and SC-PTM is assumed to be based on the same MBMS bearer. Instead, it would be more useful for the UE to directly inform its serving cell of its interest in receiving SC-PTM transmissions. As in the case for MBMS Interest Indication, the information may be used by the serving cell to facilitate the UE's reception of SC-PTM transmissions.

Proposal 4: The GCS UE should inform its serving cell of its interest in receiving service of interest via SC-PTM transmissions.

### (Scenario 1: SC-PTM ←→ Unicast)

### (SC-PTM → Unicast)

If the target cell does not provide SC-PTM transmissions for the services of interest, then the UE must be provided the same service via Unicast delivery and the UE should inform the GCS AS of the change from MBMS bearer reception to Unicast bearer reception. Depending on network implementation, the service of interest provided via Unicast may occur before or after handover completion.

Proposal 5: For service continuity, it is up to NW implementation, whether the UE should begin to receive the service of interest via Unicast before or after handover completion, in case the target cell doesn't provide the service of interest via either SC-PTM or MBSFN.

### (Unicast → SC-PTM)

In case the source cell does not provide the service of interest over SC-PTM, the service delivery is based on Unicast. And for the transition from Unicast to SC-PTM, the UE should continue to receive the service of interest via Unicast after handover. Thereafter, the UE may begin to receive the same service via SC-PTM transmissions after acquiring the necessary SC-PTM related control information after handover. This will also mean that a MBMS bearer needs to be established for the UE to receive the service via SC-PTM.

Proposal 6: If only the target cell provides the service of interest over SC-PTM, the UE should continue to receive the service of interest via Unicast upon handover completion. The UE may begin to receive the same service over SC-PTM transmission after acquiring the SC-PTM related control information at the target cell after handover.

### (Scenario 2: SC-PTM → SC-PTM)

Depending on network's decision it may be possible that the target cell already provides the same service of interest over SC-PTM since there may be sufficient number of UEs already receiving the same service over SC-PTM transmissions. For Scenario 2, it is assumed that the target cell provides the service of interest via SC-PTM transmissions; therefore, if Proposal 4 is agreeable, the source cell should inform the target cell of the UE's interest in receiving SC-PTM transmission so that it's not necessary for the UE to inform the target cell of its interest after handover completion.

Proposal 7: The source cell should inform the target cell of the UE's interest in receiving SC-PTM transmissions.

In order to support service continuity under Scenario 2, one of the following options should be considered:

### Option 1: SC-PTM → Unicast → SC-PTM

With Option 1, upon handover the service is transferred from SC-PTM to Unicast, and subsequently, the UE may join the existing SC-PTM transmission by decoding the necessary SC-PTM related control information (e.g., SIB, GCCH, etc.) to receive SC-PTM transmissions.

### Option 2: SC-PTM → SC-PTM (NW assisted)

With Option 2, the UE may continue directly to an existing SC-PTM transmission upon handover completion. There may not be a need for the UE to establish any Unicast data bearer for the service after handover if the UE is only interested in receiving the service of interest through SC-PTM transmission. In order to support direct SC-PTM to SC-PTM transition at handover, the target cell should provide the UE with the SC-PTM related control information as part of the RRC Connection Reconfiguration. Although the UE may also obtain the same information by decoding the SIB and possibly the GCCH (if supported) from the target cell (refer to [6]), depending on the periodicity of the SIB and/or GCCH, it there may be delays associated with the acquisition of the necessary control information. Therefore, the SC-PTM related control information should be provided to the UE by the target cell through dedicated signalling prior to handover completion. Then the UE may directly receive SC-PTM without delay.

### Option 3: SC-PTM → SC-PTM (UE-based)

With Option 3, the decision for the delivery mechanism (Unicast vs SC-PTM) may be left to the UE. In case the target cell is also transmitting SC-PTM for the service of interest, it may be up to the UE to obtain the necessary control information (e.g., from the serving cell or neighbour cell's SIB) prior to handover so that the service may be continued on SC-PTM upon handover completion. With the UE-based option, as long as the target cell provides the service of interest via SC-PTM it isn't necessary for the UE to receive the service via Unicast. This behaviour would align with the UE behaviour in the idle mode as described in section 2.1.1.

Proposal 8: It should decide which of the 3 options should be adopted for mobility when the UE is already receiving SC-PTM transmissions from its serving cell.

### (Scenario 3 SC-PTM ←→ MBSFN)

### (SC-PTM → MBSFN)

As pointed out in section 2.1.2 above, this scenario is mainly applicable between MBSFN area boundaries. In this case, it may be assumed that the source cell and the target cell belong to different MBSFN areas. Since the source cell already knows the UE's services of interest, the source cell may provide the interest information to the target cell as part of the UE context transfer. However, the source cell's knowledge of the UE's interest is not based on MBMS Interest Indication. It may be based on either information from the GCS AS or the new SC-PTM related interest indication in Proposal 4. Therefore, it should consider if it is necessary for the source cell to receive the MBMS interest indication in order to inform the target cell of the UE's interest in receiving MBSFN or is it sufficient for the target cell to receive other forms of indication related to the same service. Another possibility is that the source cell does not inform the target cell of UE's interest in MBSFN reception. The UE will only provide the MBMS interest indication after handover completion. However, this may cause delay for the UE to receive MBSFN transmissions.

Proposal 9: RAN2 should discuss whether the source cell needs to receive MBMS interest indication in order to inform the target cell of the UE's interest in receiving MBSFN.

In order for the UE to receive MBSFN transmissions for the services of interest it still needs to acquire SIB 13 and MCCH from the target cell. However, there may be delays acquiring SIB 13/MCCH depending on the periodicity/repetition of SIB 13/MCCH; therefore, it would be helpful if the target cell can provide the SIB13 and MCCH contents to the UE as part of the RRCConnectionReconfiguration during the handover procedure.

Proposal 10: To support service continuity in Scenario 3 for SC-PTM → MBSFN, the target cell should provide the SIB13 and MCCH contents to the UE as part of the RRCConnectionReconfiguration during the handover procedure.

### (MBSFN → SC-PTM)

For this scenario, it is assumed the target cell does not provide MBSFN transmission for the services of interest. In contrast to the case for Unicast → SC-PTM in section 2.2.1, the UE is not already receiving the service via Unicast delivery, so complexity would be substantially increased to deliver the service to the UE via Unicast just to later convert the delivery mechanism to SC-PTM once the handover is completed (i.e., MBSFN → Unicast → SC-PTM). Therefore, it is assumed that the UE should be able to receive the SC-PTM transmissions directly upon handover completion. This is similar to the case for SC-PTM → SC-PTM described in section 2.2.2. The decision made for Proposal 8 should also be applicable to this scenario to reduce complexity.

Proposal 11: For transition from MBSFN to SC-PTM, the procedure should be consistent with the decision made in Proposal 8.

### (Conclusion)

Unlike MBSFN transmissions, SC-PTM transmissions are meant for a single cell; therefore, it is necessary to understand the mobility scenarios as the UE transitions from cell to cell both in Connected and Idle modes. In particular, the scenarios whereby the target cell also transmits SC-PTM for the services of interest are considered.

### INDUSTRIAL APPLICABILITY

The present invention is useful in the field of communication.

## Claims

1. A communication method, comprising:
transmitting from a base station (200-1) to a user terminal (100-1), configuration information on a specific group communication service provided over Single Cell Point to Multi-point, SC-PTM, transmission, wherein the specific group communication service is represented by a temporary mobile group identity, TMGI, and the TMGI is mapped with a Group-Radio Network Temporary Identifier, G-RNTI;
transmitting from the base station (200-1) to the user terminal (100-1), via a Physical Downlink Control Channel, PDCCH associated with the G-RNTI, information indicating a resource used for transmitting SC-PTM data of the specific group communication service;
transmitting from the base station (200-1) to the user terminal (100-1), via a Physical Downlink Shared Channel, PDSCH, the SC-PTM data of the specific group communication service; and
transmitting from the base station (200-1) to the user terminal (100-1), information on stop of transmission of the specific group communication service provided by the SC-PTM transmission.

2. A processor (230) for controlling a base station (200-1), wherein the processor (230) is configured to execute processes of:
transmitting to a user terminal (100-1), configuration information on a specific group communication service provided over Single Cell Point to Multi-point, SC-PTM, transmission, wherein the specific group communication service is represented by a temporary mobile group identity, TMGI, and the TMGI is mapped with a Group-Radio Network Temporary Identifier, G-RNTI;
transmitting to the user terminal (100-1), via a Physical Downlink Control Channel, PDCCH associated with the G-RNTI, information indicating a resource used for transmitting SC-PTM data of the specific group communication service;
transmitting to the user terminal (100-1), via a Physical Downlink Shared Channel, PDSCH, the SC-PTM data of the specific group communication service; and
transmitting to the user terminal (100-1), information on stop of transmission of the specific group communication service provided by the SC-PTM transmission.

3. A base station (200-1), comprising a processor according to claim 2.

4. The communication method according to claim 1, further comprising:
transmitting from the base station (200-1) to another base station (200-2), a group communication including an identifier indicating a group communication service of which the user terminal (100-1) has an interest in reception.

5. The processor (230) according to claim 2, wherein
the processor (230) is further configured to execute a process of transmitting to another base station (200-2), a group communication notification including an identifier indicating a group communication service of which the user terminal (100-1) has an interest in reception.

## Patentansprüche

1. Kommunikationsverfahren, das Folgendes umfasst:
Übertragen, von einer Basisstation (200-1) an eine Benutzerendvorrichtung (100-1), von Konfigurationsinformationen zu einem spezifischen Gruppenkommunikationsdienst, der über eine Einzelzellen-Punkt-zu-Mehrpunkt- (Single Cell Point to Multi-Point, SC-PTM) Übertragung bereitgestellt wird, wobei der spezifische Gruppenkommunikationsdienst durch eine temporäre mobile Gruppenidentität (Temporary Mobile Group Identity, TMGI) dargestellt wird und die TMGI mit einer temporären Gruppenfunknetz-Kennung (Group-Radio Network Temporary Identifier, G-RNTI) abgebildet wird;
Übertragen von der Basisstation (200-1) zur Benutzerendvorrichtung (100-1), über einen physischen Downlink-Steuerkanal (Physical Downlink Control Channel, PDCCH), der dem G-RNTI zugeordnet ist, von Informationen, die eine Ressource angeben, die zum Übertragen von SC-PTM-Daten des spezifischen Gruppenkommunikationsdienstes verwendet wird;
Übertragen, von der Basisstation (200-1) zur Benutzerendvorrichtung (100-1), über einen gemeinsam genutzten physischen Downlink-Kanal (Physical Downlink Shared Channel, PDSCH) der SC-PTM-Daten des spezifischen Gruppenkommunikationsdienstes; und
Übertragen, von der Basisstation (200-1) zur Benutzerendvorrichtung (100-1), von Informationen zum Stoppen der Übertragung des spezifischen Gruppenkommunikationsdienstes, der von der SC-PTM-Übertragung bereitgestellt wird.

2. Prozessor (230) zum Steuern einer Basisstation (200-1), wobei der Prozessor (230) dafür konfiguriert ist, folgende Prozesse auszuführen:
Übertragen, an eine Benutzerendvorrichtung (100-1), von Konfigurationsinformationen zu einem spezifischen Gruppenkommunikationsdienst, der über eine Einzelzellen-Punkt-zu-Mehrpunkt- (Single Cell Point to Multi-Point, SC-PTM) Übertragung bereitgestellt wird, wobei der spezifische Gruppenkommunikationsdienst durch eine temporäre mobile Gruppenidentität, TMGI, dargestellt wird und die TMGI mit einer temporären Gruppenfunknetz-Kennung, G-RNTI, abgebildet wird;
Übertragen an die Benutzerendvorrichtung (100-1), über einen physischen Downlink-Steuerkanal, PDCCH, der dem G-RNTI zugeordnet ist, von Informationen, die eine Ressource angeben, die zum Übertragen von SC-PTM-Daten des spezifischen Gruppenkommunikationsdienstes verwendet wird;
Übertragen, zur Benutzerendvorrichtung (100-1), über einen gemeinsam genutzten physischen Downlink-Kanal, PDSCH, der SC-PTM-Daten des spezifischen Gruppenkommunikationsdienstes; und
Übertragen, zur Benutzerendvorrichtung (100-1), von Informationen zum Stoppen der Übertragung des spezifischen Gruppenkommunikationsdienstes, der von der SC-PTM-Übertragung bereitgestellt wird.

3. Basisstation (200-1), die einen Prozessor nach Anspruch 2 umfasst.

4. Kommunikationsverfahren nach Anspruch 1, das ferner Folgendes umfasst:
Übertragen, von der Basisstation (200-1) zu einer anderen Basisstation (200-2), einer Gruppenkommunikation, die eine Kennung umfasst, die einen Gruppenkommunikationsdienst angibt, an dessen Empfang die Benutzerendvorrichtung (100-1) interessiert ist.

5. Prozessor (230) nach Anspruch 2, wobei
der Prozessor (230) ferner dafür konfiguriert ist, einen Prozess des Übertragens einer Gruppenkommunikationsbenachrichtigung an eine andere Basisstation (200-2) auszuführen, die eine Kennung umfasst, die einen Gruppenkommunikationsdienst angibt, an dessen Empfang die Benutzerendvorrichtung (100-1) interessiert ist.

## Revendications

1. Procédé de communication, comprenant :
la transmission d'une station de base (200-1) à un terminal utilisateur (100-1), d'informations de configuration sur un service de communication de groupe spécifique fourni sur une transmission point à multipoint à cellule unique, SC-PTM, dans lequel le service de communication de groupe spécifique est représenté par une identité de groupe mobile temporaire, TMGI, et l'identité de groupe mobile temporaire, TMGI, est mappée avec un identifiant temporaire de réseau radio de groupe, G-RNTI ;
la transmission de la station de base (200-1) au terminal utilisateur (100-1), via un canal de commande de liaison descendante physique, PDCCH, associé au G-RNTI, d'informations indiquant une ressource utilisée pour transmettre des données SC-PTM du service de communication de groupe spécifique ;
la transmission de la station de base (200-1) au terminal utilisateur (100-1), via un canal partagé de liaison descendante physique, PDSCH, des données SC-PTM du service de communication de groupe spécifique ; et
la transmission de la station de base (200-1) au terminal utilisateur (100-1), d'informations sur l'arrêt de la transmission du service de communication de groupe spécifique fourni par la transmission SC-PTM.

2. Processeur (230) pour contrôler une station de base (200-1), dans lequel le processeur (230) est configuré pour exécuter les processus suivants :
la transmission à un terminal utilisateur (100-1), d'informations de configuration sur un service de communication de groupe spécifique assuré par transmission point à multipoint à cellule unique, SC-PTM, dans lequel le service de communication de groupe spécifique est représenté par une identité de groupe mobile temporaire, TMGI, et l'identité de groupe mobile temporaire, TMGI, est mappée avec un identificateur temporaire de réseau radio de groupe, G-RNTI ;
la transmission au terminal utilisateur (100-1), via un canal de commande de liaison descendante physique, PDCCH, associé au G-RNTI, d'informations indiquant une ressource utilisée pour transmettre des données SC-PTM du service de communication de groupe spécifique ;
la transmission au terminal utilisateur (100-1), via un canal partagé de liaison descendante physique, PDSCH, des données SC-PTM du service de communication de groupe spécifique ; et
la transmission au terminal utilisateur (100-1), d'informations sur l'arrêt de la transmission du service de communication de groupe spécifique fourni par la transmission SC-PTM.

3. Station de base (200-1), comprenant un processeur selon la revendication 2.

4. Procédé de communication selon la revendication 1, comprenant en outre :
la transmission depuis la station de base (200-1) vers une autre station de base (200-2), une communication de groupe comprenant un identifiant indiquant un service de communication de groupe dont le terminal utilisateur (100-1) a un intérêt à la réception.

5. Processeur (230) selon la revendication 2, dans lequel le processeur (230) est en outre configuré pour exécuter un processus de transmission à une autre station de base (200-2), d'une notification de communication de groupe incluant un identifiant indiquant un service de communication de groupe dont le terminal utilisateur (100-1) a intérêt à la réception.
